# EUROPEAN PATENT SPECIFICATION

(11) **EP 1 763 637 B1**
(45) Date of publication and mention of the grant of the patent: **26.11.2008**
(21) Application number: 05752634.5
(22) Date of filing: 17.06.2005
(51) Int. Cl.: F04B 49/02, F04B 41/02, F04B 39/16, B60T 17/02

(54) **ARRANGEMENT AND METHOD FOR A COMPRESSED AIR SYSTEM**
ANORDNUNG UND VERFAHREN FÜR EIN DRUCKLUFTSYSTEM
DISPOSITIF ET PROCEDE DESTINES A UN SYSTEME D'AIR COMPRIME

(30) Priority: 30.06.2004 SE 0401677
(43) Date of publication of application: 21.03.2007
(73) Proprietor: VOLVO LASTVAGNAR AB, 405 08 Göteborg (SE)
(72) Inventor: SABELSTRÖM, Mats, S-427 37 Billdal (SE); MELIN, Kaj, S-448 36 Floda (SE)
(74) Representative: Fröhling, Werner Otto
(86) International application number: PCT/SE2005/000967
(87) International publication number: WO 2006/004493

(56) References cited:
- US-A- 5 103 576
- US-A- 5 458 676
- US-A- 5 592 754
- US-A- 6 036 449

## Description

### TECHNICAL FIELD:

The present invention relates to an arrangement for a compressed air system comprising an air compressor arranged to generate compressed air for said compressed air system, an air dryer arranged to dry said generated compressed air and means for unloading said air compressor in certain conditions.

The invention also relates to a method for a compressed air system, comprising generation of compressed air for said compressed air system by means of an air compressor, drying of said generated compressed air by means of an air dryer, and unloading of said air compressor in certain conditions.

### BACKGROUND ART:

In association with certain vehicles, in particular heavy goods vehicles, an air compressor and a valve arrangement are normally used for generating and distributing compressed air to a compressed air system, which in turn comprises components that use compressed air such as, for example, the vehicle's air suspension system and braking system, and also pressure tanks, compressed air lines and various types of valves.

In a way that is already known, the said air compressor is driven mechanically by means of the vehicle's combustion engine. In addition, the compressor is arranged to generate a suitable system pressure in the compressed air system. This is carried out by a control which, in turn, means that the compressor is activated when the system pressure falls below a lower permitted limit level and changes to an unloading phase when the system pressure exceeds a certain upper limit level. Unloading of the compressor corresponds to its ability to generate compressed air being shut off or greatly reduced and/or to the air that the compressor generates being led out into the open air so that the compressor does not work against an overpressure.

In association with control of the function of an air compressor, it is known that there is a need to unload its function in the event of certain predetermined operating states. Such unloading is usually carried out by sending a pneumatic control signal to the compressor with the object of changing its valve function or reducing its function for generating compressed air in some other way. It can be noted here that patent document US 6036449 shows an arrangement in which an air compressor is arranged to be activated only when different engine activities require this, or when engine power is available for operation of the air compressor. This known arrangement comprises an air pressure regulator that is arranged to control the operating mode of the compressor in response to the pressure level in the system.

In addition, a compressed air system normally comprises an air dryer. An air dryer is arranged to remove moisture from the compressed air that is supplied from the compressor to the compressed air system. By removing moisture from the compressed air, the danger is reduced of corrosion in the various components that are comprised in the compressed air system. In this way, the life of the various pneumatic components can be optimized. In addition, the danger is reduced of any loss of function. At the same time, correct functioning at low temperatures is ensured, as freezing of any condensate can be prevented by means of the air dryer.

In spite of known systems for regulating and unloading a compressor's function working satisfactorily, there is a need to make further improvements in this field. In particular, there is a need for systems for initiating an unloading phase of the compressor in situations that would otherwise cause damage and loss of function in the compressed air system.

### DISCLOSURE OF INVENTION:

An object of the present invention is to provide an improved arrangement and an improved method for unloading air compressors, in particular on motor vehicles.

This object is achieved by means of an arrangement of the type mentioned in the introduction, which is characterized in that the said means comprises a control unit, arranged to send a control signal to a valve, and an air line between said valve and air compressor, with said control unit being arranged to activate said control signal for unloading the air compressor in the event of at least one predetermined operating state of the air compressor corresponding to a condition where the speed of said engine exceeds a first predetermined limit value so as to reduce oil vapour emitted from the lubrication system of the compressor into the compressed air.

The object is also achieved by means of a method of the type mentioned in the introduction, which is characterized in that it comprises generation of a control signal from a control unit to a valve, for activation of an air flow via the valve, an air line and onward to the air compressor, for unloading the air compressor in the event of at least one predetermined operating state of the air compressor corresponding to a condition where the speed of said egine exceeds a first predetermined limit value so as to reduce oil vapour emitted from the lubrication system of the compressor into the compressed air.

Certain benefits are obtained by means of the invention. Firstly, it can be mentioned that the invention can be utilized in a simple and effective way to unload an air compressor in certain situations. In particular, unloading can take place at high speeds of the compressor. High speeds mean that the compressor is operating in a relatively hot state which means that the amount of oil vapour emitted from the compressor's lubrication system into the compressed air increases. In this relatively hot state, this oil is also oxidized, which is harmful to the compressed air system. The invention can thus be used to reduce wear and tear and carbonization in the compressor and to reduce the amount of aggressive oil in the compressed air system that can interfere with the function of the components comprised in the compressed air system.

According to a preferred embodiment, the abovementioned control unit can be used to control a solenoid valve in an air dryer, which leads to unloading of the air compressor in an efficient way using existing components. The invention can also be used as a supplement to controlling of the air dryer, with the air compressor being unloaded in the event, for example, of high engine speeds and/or large increases in engine speed.

### BRIEF DESCRIPTION OF DRAWINGS:

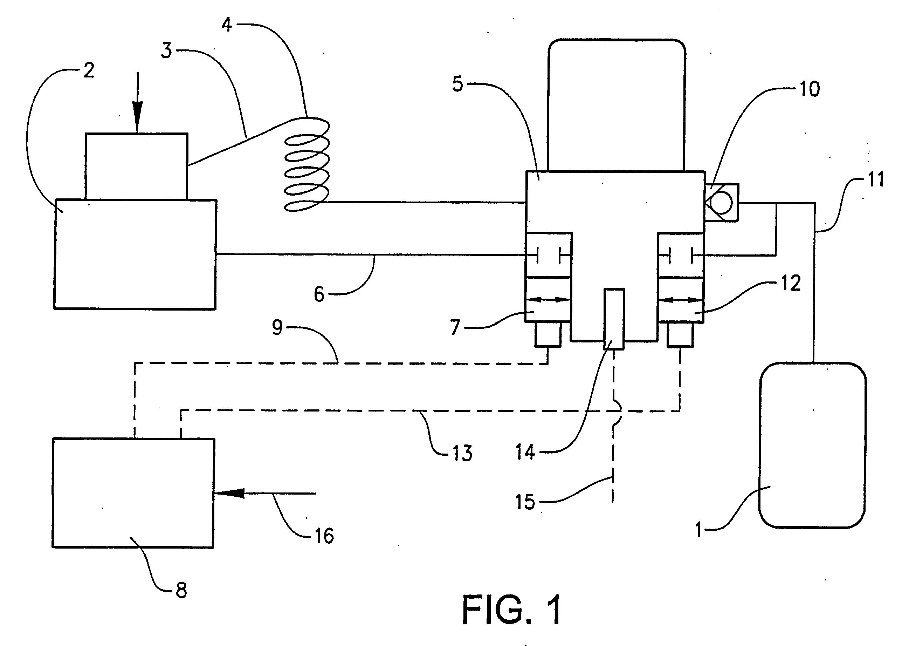

The invention will be described in the following with reference to a preferred embodiment and the attached Figure 1, which shows an outline diagram of a compressed air system that has been designed in accordance with the invention.

### MODE(S) FOR CARRYING OUT THE INVENTION:

Figure 1 shows an outline diagram of an arrangement intended to be used for generating compressed air in a motor vehicle, that preferably, but not exclusively, can consist of a compressed air system for a heavy goods vehicle. According to a preferred embodiment, the arrangement is used in association with a compressed air system 1 of a known type. The compressed air system 1, which comprises, for example, a pressure tank and components in the vehicle's air suspension system and braking system, is illustrated only schematically in Figure 1.

Compressed air intended for the compressed air system 1 is generated in an air compressor 2 which, for this purpose, is suitably connected mechanically to a combustion engine (not shown) in the vehicle concerned for operation of the compressor 2. In this way, air can be taken from the atmosphere (shown by an arrow), compressed and then discharged in an outgoing first air line 3. The compressed air is then fed from the compressor 2 via a cooling device 4, suitably in the form of cooling coils constructed of, for example, a steel pipe of a certain length, and onward to an air dryer 5.

The compressor 2 is arranged to generate a suitable system pressure in the compressed air system 1. This is carried out by the compressor 2 being activated for supplying compressed air when the system pressure falls below a lower permitted limit level and, in addition, by the compressor changing to an unloading phase when the system pressure exceeds a particular upper limit level. As a result of the system pressure in the compressed air system 1 varying during operation of the vehicle, the compressor 2 can thus be arranged to change between an active phase and an unloading phase. The principles of the regulation of a compressor in response to the system pressure are already known and will therefore not be described here in detail.

The air dryer 5 and the compressor 2 are also connected via a second air line 6. As will be described in greater detail below, this second air line 6 is arranged to be used to control the function of the compressor 2 in the event of certain predetermined operating states. For this purpose, the second air line 6 is arranged to interact with a solenoid valve 7 belonging to the air dryer 5. In this way, an air flow can be fed to the compressor 2 via the second air line 6 upon activation of the solenoid valve 7. The solenoid valve 7 can also be arranged so that, upon activation, it opens a link between the pipe 4 and the atmosphere, so that any air that the compressor pumps is discharged into the open air. The solenoid valve 7 is, in turn, controlled by means of a control unit 8, which can be suitably computer-based and can already be found in the vehicle concerned. In certain predetermined operating states of the compressed air system and the vehicle concerned, which will be described in greater detail below, the control unit 8 generates an electrical control signal 9 to the solenoid valve 7 which, in turn, leads to a pneumatic signal being fed over the second air line 6 and results in the compressor 2 being put into its inactive mode, that is the unloading phase.

In addition, the air dryer 5 is arranged in such a way that the compressed air (that has passed through the air dryer 5) is fed via a non-return valve 10, a third air line 11 and onward to the compressed air system 1. The air dryer 5 also has an additional solenoid valve 12 which is utilized for regeneration of the air dryer 5. This regeneration is carried out in a known way in order to dry, that is regenerate, a drying agent in the air dryer 5. In this way, the function of the air dryer 5 is restored at certain intervals, so that it can be ensured that the air dryer has a long life. More specifically, this solenoid valve 12 is opened and closed by means of the abovementioned control unit 8 at certain suitable intervals, via an additional electrical control signal 13. In the event of opening of the solenoid valve 12, air flows back from the compressed air system and blows through the drying agent in the air dryer 5, so that this is regenerated. Thereafter, the moist air is released into the atmosphere.

According to the embodiment that is shown in the figure, the air dryer 5 also comprises a heater 14, the purpose of which is to heat up the condensate that is collected in the air dryer 5, so that this body of water does not freeze and cause a breakdown. The heater 14 is suitably provided with electrical current via a power cable 15.

A basic principle of the present invention is that the compressor 2 can be protected from the danger of an overload which would otherwise be a danger in the event of certain well-defined operating states. An example of such a predetermined operating state is operation of the vehicle's engine (and thus also operation of the compressor 2) at very high speeds, typically of the order of 2500 revs/min or higher. If the compressor 2 were to pump air at very high speeds, the compressor would be subject to very high loads and would, in addition, contaminate the compressed air with a large amount of oil vapour, which is not desirable. This unwanted quantity of oil vapour can damage the compressor 2 by carbonizing in its valve mechanism, which in turn can lead to a loss of function. The unwanted oil can also cause damage in the rest of the compressed air system due to carbonization, coating of pressure tanks and blocking of valves and other components along the compressed air system. The oil can also cause dissolving of material in rubber and plastic components in the compressed air system, for example gaskets and seals. This damage can be caused directly by the oil and also by oil that has oxidized at high temperatures that arise in the event of high engine speeds and high loading. This can, in turn, cause material damage and loss of function.

In order to achieve effective unloading of the compressor 2 in the event of relevant operating states, the control unit 8 is thus arranged to control the solenoid valve 7 which, in turn, allows an air flow through the second air line 6 and towards the compressor 2. In this way, the compressor 2 is able to be unloaded. From a purely practical point of view, this is suitably carried out by controlling the compressor 2 so that its ability to pump air is shut off or greatly reduced. For example, this can in turn be achieved by the air flow in the second air line 6 opening a link connected to the cylinder (not shown) in the compressor 2 so that the compressed air is not pumped towards the air dryer and the rest of the compressed air system. Alternatively, this can be achieved by activating some form of connection that disconnects the drive mechanism of the compressor 2, so that it stops and thus cannot generate compressed air. Such solutions are, however, not shown in detail in the figure.

The invention can suitably be arranged in such a way that the air compressor 2 is unloaded in the event of relatively high engine speeds of the combustion engine in question in the vehicle (and as a result thereof, relatively high speeds of the compressor 2) or in the event of relatively high rates of increase in the said speed. For this purpose, a data link 16 is connected to the abovementioned control unit 8. This data link 16 contains information about relevant data, such as the current speed of the engine in question and, for this purpose, it is connected to sensors (not shown) for detecting the engine speed and other necessary detectors in the vehicle.

In a possible application, unloading of the compressor 2 can be initiated via the solenoid valve 7 and the second air line 6 when at least one of the following conditions is fulfilled:
i) the speed of the engine exceeds a predetermined limit value,
ii) the rate of increase in the engine speed exceeds a predetermined limit value,
iii) the torque of the engine exceeds a predetermined limit value.

Of course, a combination of one or more of these limit value conditions can be used to determine whether initiation of the unloading function is to be carried out.

For a normal application, the limit value for the engine speed can be of the order of 2500 rpm, but the invention is not restricted to precisely this engine speed, other engine speeds being possible.

In addition, switching on and off of the unloading function preferably takes place with a hysteresis, which means that different levels of the respective conditions are used depending upon whether switching on or off of the unloading function is concerned.

In addition, conditions can be introduced that mean that the system pressure must exceed a predetermined minimum value in order for the unloading function of the compressor 2 to be able to be activated. Such a minimum value can suitably correspond to a system pressure that is at least sufficiently high to ensure a correct braking function of the vehicle and sufficient lifting force in the vehicle's air suspension system.

Thus, the invention can be used to avoid charging at high engine speeds as the compressor here works at higher temperatures and generates a relatively large amount of harmful oxidized oil in the compressed air system. In addition, the amount of wear and tear and carbonization in the compressor 2 is reduced. An additional advantage of the invention is that it is possible to control the unloading phase of the compressor 2 so that power losses in the event of acceleration of the vehicle can be minimized. This is particularly advantageous in the event of acceleration of the vehicle, as the compressor requires a relatively high power output if it charges during acceleration and high engine speeds.

The invention is particularly suitable for the type of compressed air system that comprises the abovementioned air dryer 5 with an existing solenoid valve 7 which can be utilized to control the air dryer electronically. More specifically, the air dryer 5 can be controlled so that it is able to discharge condensate at suitable times. In this way, the invention can thus act as a supplement to an existing control of the air dryer 5, so that the air compressor 2 is, in addition, unloaded at, for example, high engine speeds.

The invention is not limited to the embodiment described above and shown in the figure, but can be varied within the framework of the following patent claims. For example, the invention can be used with different types of vehicle, for example cars, lorries, construction vehicles and buses, that comprise a compressor for supplying a compressed air system. In principle, the invention can also be used with applications that are not related to vehicles.

It should be noted that the invention can also be used with systems that do not have a heater in the air dryer.

## Claims

1. A compressed air system (1) of a vehicle, comprising an air compressor (2) which is driven by means of an engine arranged in the vehicle, and arranged to generate compressed air for said compressed air system (1), an air dryer (5) arranged to dry said generated compressed air and means (4, 6, 7, 8, 9) for unloading said air compressor (2) in certain conditions, wherein said means (4, 6, 7, 8, 9) comprises a control unit (8) arranged to send a control signal (9) to a valve (7), and an air line (6) between said valve (7) and the air compressor (2), **characterized in that** said control unit (8) is arranged to activate said control signal (9) for unloading the air compressor (2) in the event of at least one predetermined operating state of the air compressor (2) corresponding to a condition where the speed of said engine exceeds a first predetermined limit value so as to reduce oil vapour emitted from the lubrication system of the compressor into the compressed air.

2. The system as claimed in claim 1, **characterized in that** the control unit (8) is arranged to activate said unloading only in the event of a system pressure in said compressed air system (1) that exceeds a predetermined minimum value, which corresponds to the system pressure being sufficiently high to ensure a correct braking function of the vehicle and/or sufficient lifting force in the vehicle's air suspension system.

3. The system as claimed in any one of the preceding claims, **characterized in that** the control unit (8) is arranged to control said unloading with a hysteresis.

4. The system as claimed in any one of the preceding claims, **characterized in that** the control unit (8) is arranged to be connected to a data link (16), by means of which information about relevant data is transferred for determining whether said predetermined operating states apply.

5. The system as claimed in any one of the preceding claims, **characterized in that** said valve (7) is arranged to be connected directly to said air dryer (5).

6. A method for a compressed air system (1), comprising:
generation of compressed air for said compressed air system (1) by means of an air compressor (2) operated by means of an engine adapted for a motor vehicle,
drying of said generated compressed air by means of an air dryer (5), and
unloading of said air compressor (2) in certain conditions,
**characterized in that** said method comprises in addition:
generation of a control signal (9) from a control unit (8) to a valve (7) for activating an air flow via the valve (7), an air line (6) and onward to said air compressor (2), for unloading the air compressor (2) in the event of at least one predetermined operating state of the air compressor (2) corresponding to a condition where the speed of said engine exceeds a first predetermined limit value so as to reduce oil vapour emitted from the lubrication system of the compressor into the compressed air.

7. The method as claimed in claim 6, **characterized in that** said unloading can be initiated in the event of a system pressure in said compressed air system (1) that exceeds a predetermined minimum value, which corresponds to the system pressure being sufficiently high to ensure a correct braking function of the vehicle and/or lifting force in the vehicle's air suspension system.

8. The method as claimed in claim 7, **characterized in that** it comprises controlling said unloading of the compressor (2) with a hysteresis.

9. The method as claimed in any one of claims 6-8, **characterized in that** it comprises transmission to said control unit (8) of information about relevant data for determining whether said predetermined operating states apply.

## Patentansprüche

1. Druckluftsystem (1) eines Fahrzeugs, mit einem Luftkompressor (2), der mittels eines in dem Fahrzeug angeordneten Motors angetrieben wird und zur Erzeugung von Druckluft für das Druckluftsystem (1) angeordnet ist, einem Lufttrockner (5), der zum Trocknen der erzeugten Druckluft angeordnet ist, und Einrichtungen (4, 6, 7, 8, 9) für ein Entladen des Luftkompressors (2) bei bestimmten Zuständen, wobei die Einrichtungen (4, 6, 7, 8, 9) eine Steuereinheit (8), die zum Senden eines Steuersignals (9) an ein Ventil (7) konfiguriert ist, und eine Luftleitung (6) zwischen dem Ventil (7) und dem Luftkompressor (2) umfassen,
**dadurch gekennzeichnet, dass** die Steuereinheit (8) so konfiguriert ist, dass sie das Steuersignal (9) zum Entladen des Luftkompressors (2) aktiviert, wenn wenigstens ein vorherbestimmter Betriebszustand des Luftkompressors (2) auftritt, der einem Zustand entspricht, in dem die Drehzahl des Motors einen ersten vorherbestimmten Grenzwert überschreitet, um Öldampf zu reduzieren, der von dem Schmiersystem des Kompressors in die Druckluft abgegeben wird.

2. System nach Anspruch 1, **dadurch gekennzeichnet, dass** die Steuereinheit (8) so konfiguriert ist, dass sie das Entladen nur dann aktiviert, wenn ein Systemdruck in dem Druckluftsystem (1) auftritt, der einen vorherbestimmten Minimalwert überschreitet, der dem Systemdruck entspricht, der ausreichend groß ist, um eine korrekte Bremsfunktion des Fahrzeugs und/oder eine ausreichende Hubkraft in dem Luftfederungssystem des Fahrzeugs sicherzustellen.

3. System nach einem der vorhergehenden Ansprüche, **dadurch gekennzeichnet, dass** die Steuereinheit (8) so konfiguriert ist, dass sie das Entladen mit einer Hysterese steuert.

4. System nach einem der vorhergehenden Ansprüche, **dadurch gekennzeichnet, dass** die Steuereinheit (8) so konfiguriert ist, dass sie mit einer Datenverbindung (16) verbunden wird, mittels derer Informationen über relevante Daten übertragen werden, um zu bestimmen, ob die vorherbestimmten Betriebszustände gelten.

5. System nach einem der vorhergehenden Ansprüche, **dadurch gekennzeichnet, dass** das Ventil (7) so angeordnet ist, dass es direkt mit dem Lufttrockner (5) verbunden wird.

6. Verfahren für ein Druckluftsystem (1), bei dem
Druckluft für das Druckluftsystem (1) mittels eines Luftkompressors (2) erzeugt wird, der mittels eines Motors betrieben wird, der für ein Kraftfahrzeug angepasst ist,
die erzeugte Druckluft mittels eines Lufttrockners (5) getrocknet wird, und
der Luftkompressor (2) bei bestimmten Zuständen entladen wird,
**dadurch gekennzeichnet, dass** das Verfahren zusätzlich umfasst:
die Erzeugung eines Steuersignals (9) von einer Steuereinheit (8) an ein Ventil (7) zur Aktivierung einer Luftströmung über das Ventil (7), eine Luftleitung (6) und weiter zu dem Luftkompressor (2) zum Entladen des Luftkompressors (2), wenn wenigstens ein vorherbestimmter Betriebszustand des Luftkompressors (2) auftritt, der einem Zustand entspricht, in dem die Drehzahl des Motors einen ersten vorherbestimmten Grenzwert überschreitet, um Öldampf zu reduzieren, der von dem Schmiersystem des Kompressors in die Druckluft abgegeben wird.

7. Verfahren nach Anspruch 6, **dadurch gekennzeichnet, dass** das Entladen initiiert werden kann, falls ein Systemdruck in dem Druckluftsystem (1) auftritt, der einen vorherbestimmten Minimalwert überschreitet, der dem Systemdruck entspricht, der ausreichend groß ist, um eine korrekte Bremsfunktion des Fahrzeugs und/oder eine Hubkraft in dem Luftfederungssystem des Fahrzeugs sicherzustellen.

8. Verfahren nach Anspruch 7, **dadurch gekennzeichnet, dass** es die Steuerung des Entladens des Kompressors (2) mit einer Hysterese umfasst.

9. Verfahren nach einem der Ansprüche 6 bis 8, **dadurch gekennzeichnet, dass** es die Übertragung von Informationen an die Steuereinheit (8) über relevante Daten zur Bestimmung umfasst, ob die vorherbestimmten Betriebszustände gelten.

## Revendications

1. Système d'air comprimé (1) d'un véhicule, comportant un compresseur d'air (2) qui est entraîné par l'intermédiaire d'un moteur agencé dans le véhicule, et qui est agencé pour générer de l'air comprimé destiné audit système d'air comprimé (1), un séchoir d'air (5) agencé pour sécher ledit air comprimé généré, et des moyens (4, 6, 7, 8, 9) pour décharger ledit compresseur d'air (2) dans certaines conditions, lesdits moyens (4, 6, 7, 8, 9) comprenant une unité de commande (8) agencée pour envoyer un signal de commande (9) à une vanne (7), et une ligne d'air (6) entre ladite vanne (7) et le compresseur d'air (2), **caractérisé en ce que** ladite unité de commande (8) est agencée pour activer ledit signal de commande (9) afin de décharger le compresseur d'air (2) dans le cas d'au moins un état de fonctionnement prédéterminé du compresseur d'air (2) correspondant à un état dans lequel la vitesse dudit moteur dépasse une première valeur limite prédéterminée, de manière à réduire la vapeur d'huile émise par le système de lubrification du compresseur dans l'air comprimé.

2. Système selon la revendication 1, **caractérisé en ce que** l'unité de commande (8) est agencée pour activer ledit déchargement uniquement dans le cas d'une pression de système dans ledit système d'air comprimé (1) qui dépasse une valeur minimum prédéterminée, qui correspond à la pression de système suffisamment élevée pour garantir une fonction de freinage correcte du véhicule et/ou une force de levage suffisante dans le système de suspension pneumatique du véhicule.

3. Système selon l'une quelconque des revendications précédentes, **caractérisé en ce que** l'unité de commande (8) est agencée pour commander ledit déchargement avec une hystérésis.

4. Système selon l'une quelconque des revendications précédentes, **caractérisé en ce que** l'unité de commande (8) est agencée pour être reliée à une liaison de données (16), par l'intermédiaire de laquelle des informations concernant des données pertinentes sont transférées pour déterminer si lesdits états de fonctionnement prédéterminés s'appliquent.

5. Système selon l'une quelconque des revendications précédentes, **caractérisé en ce que** ladite vanne (7) est agencée pour être reliée directement audit séchoir d'air (5).

6. Procédé pour un système d'air comprimé (1), comprenant les étapes consistant à :
générer de l'air comprimé pour ledit système d'air comprimé (1) par l'intermédiaire d'un compresseur d'air (2) actionné par l'intermédiaire d'un moteur adapté à un véhicule à moteur,
sécher ledit air comprimé généré par l'intermédiaire d'un séchoir d'air (5), et
décharger ledit compresseur d'air (2) dans certaines conditions,
**caractérisé en ce que** ledit procédé comporte en outre les étapes consistant à :
générer un signal de commande (9) à partir d'une unité de commande (8) vers une vanne (7) pour activer un écoulement d'air via la vanne (7), une ligne d'air (6) et en avant vers ledit compresseur d'air (2), pour décharger le compresseur d'air (2) dans le cas d'au moins un état de fonctionnement prédéterminé du compresseur d'air (2) correspondant à un état dans lequel la vitesse dudit moteur dépasse une première valeur limite prédéterminée de manière à réduire une vapeur d'huile émise par le système de lubrification du compresseur dans l'air comprimé.

7. Procédé selon la revendication 6, **caractérisé en ce que** ledit déchargement peut être déclenché dans le cas d'une pression de système dans ledit système d'air comprimé (1) qui dépasse une valeur minimum prédéterminée, qui correspond à la pression de système suffisamment élevée pour garantir une fonction de freinage correcte du véhicule et/ou une force de levage correcte dans le système de suspension pneumatique du véhicule.

8. Procédé selon la revendication 7, **caractérisé en ce qu'**il comprend l'étape consistant à commander ledit déchargement du compresseur (2) avec une hystérésis.

9. Procédé selon l'une quelconque des revendications 6 à 8, **caractérisé en ce qu'**il comprend la transmission à ladite unité de commande (8) d'informations concernant des données pertinentes pour déterminer si lesdits états de fonctionnement prédéterminés s'appliquent.
